# EUROPEAN PATENT SPECIFICATION

(11) **EP 2 136 234 B1**
(45) Date of publication and mention of the grant of the patent: **17.12.2014**
(21) Application number: 09007619.1
(22) Date of filing: 09.06.2009
(51) Int. Cl.: G02B 21/36, G03B 7/093, H04N 5/235, H04N 5/232

(54) **Microscope imaging system, storage medium and exposure adjustment method**
Mikroskop-Abbildungssystem, Speichermedium und Verfahren zur Belichtungseinstellung
Système d'imagerie comprenant un microscope, milieu d'enregistrement d'information et procédé de réglage d'exposition

(30) Priority: 16.06.2008 JP 2008156462
(43) Date of publication of application: 23.12.2009
(73) Proprietor: Olympus Corporation, Shibuya-ku Tokyo 151-0072 (JP)
(72) Inventor: Ogihara, Tomoharu, Shibuya-ku Tokyo 151-0072 (JP); Aizaki, Shinichiro, Shibuya-ku Tokyo 151-0072 (JP)
(74) Representative: von Hellfeld, Axel

(56) References cited:
- JP-A- 11 202 216
- JP-A- 2003 230 154
- US-A1- 2003 218 742

## Description

### Background of the Invention

### Field of the Invention

The present invention relates to the automatic exposure control of a microscope imaging apparatus for imaging an observation image obtained by a microscope through an imaging unit, such as a CCD or the like.

### Description of the Related Art

Conventionally, a microscope imaging apparatus capable of imaging the observation image of a microscope through an imaging unit, such as a CCD (charge-coupled device) is used as a peripheral device attached to the microscope. When displaying an observation image obtained by a microscope on a monitor or recording it as a static image, such a microscope imaging apparatus controls exposure using a prescribed metering method and automatically sets an optimal exposure time.

For the metering method, a spot metering method for metering an image picked up by an imaging unit in a narrow range (for example, Japanese Laid-open Patent Publication No. H1-267621) is used. A center-weighted metering method and a multi-division metering method, each of which divides the entire screen into several points and metering the divided points by weighting them (for example, Japanese Laid-open Patent Publication No. 2002-320137).

For the prior art of an automatic exposure control device, Japanese Laid-open Patent Publication No. S55-70822 is used.

US 2003/0218742 discloses a method for determining a surface quality of a substrate sample using a differential interference contrast microscope. The microscope includes an eyepiece, an eyepiece focus adjustment, a microscope focus adjustment, a light source, at least of an aperture or a reticule a camera view, a prism and an eyepiece. The method includes calibrating the focus of the eyepiece with the focus of the camera and determining a peak response ratio for the microscope through adjustment of the phase between differential beams of the microscope.

### Summary of the Invention

A microscope imaging system in the preferred embodiment of the present invention includes
an imaging unit for imaging a specimen image outputted from a microscope,
an imaging drive unit for driving the imaging unit,
an image output unit for outputting the picked-up image,
an acquisition unit for obtaining a second image area being a focus area composed of one or more pixels arbitrarily specified in the first image area indicated by an entire area or a predetermined area of the outputted image,
a brightness histogram generation unit for generating the first brightness histogram of the first image area and the second brightness histogram of the second image area,
a brightness value calculation unit for calculating the relative brightness value of the second image area against the first image area by detecting the feature point of the second brightness histogram and calculating a position corresponding to the feature point of the second brightness histogram in the first brightness histogram and
an exposure control unit for controlling the imaging drive unit until it reaches the calculated brightness value.

A storage medium on which is stored an exposure adjustment program for enabling a computer to execute a process for adjusting exposure when picking up an image observed by a microscope, in the preferred embodiment of the present invention, the program includes
imaging a specimen image outputted from a microscope by driving an imaging device,
outputting the picked-up image,
obtaining a second image area being a focus area composed of one or more pixels arbitrarily specified in the first image area indicated by an entire area or a predetermined area of the outputted image,
generating the first brightness histogram of the first image area and the second brightness histogram of the second image area,
calculating the relative brightness value of the second image area against the first image area by detecting the feature point of the second brightness histogram and calculating a position corresponding to the feature point of the second brightness histogram in the first brightness histogram and
controlling the image device until it reaches the calculated brightness value.

An exposure adjustment method of a microscope imaging system for adjusting exposure when picking up an image observed by a microscope in the preferred embodiment of the present invention includes
imaging a specimen image outputted from a microscope by driving an imaging device,
outputting the picked-up image,
obtaining a second image area being a focus area composed of one or more pixels arbitrarily specified in the first image area indicated by an entire area or a predetermined area of the outputted image,
generating the first brightness histogram of the first image area and the second brightness histogram of the second image area,
calculating the relative brightness value of the second image area against the first image area by detecting the feature point of the second brightness histogram and calculating a position corresponding to the feature point of the second brightness histogram in the first brightness histogram and
controlling the image device until it reaches the calculated brightness value.

### Brief Description of the Drawings

Fig. 1 illustrates the configuration of a microscope system in the first preferred embodiment.
Fig. 2 illustrates one example of an observation image displayed on a monitor 19.
Fig. 3 illustrates one example of the brightness histogram of the entire observation image.
Fig. 4 illustrates one example of the brightness histograms of the entire observation image and its focus area.
Fig. 5 illustrates the flowchart of the exposure control in the first preferred embodiment.
Fig. 6 illustrates the brightness histogram in the case where the lightness of the entire screen has wholly changed.
Fig. 7A illustrates the configuration of a microscope system in the first preferred embodiment (variation).
Fig. 7B illustrates the configurations of a personal computer 32 in the first preferred embodiment (variations).
Fig. 8 illustrates the flowchart of the exposure control in the second preferred embodiment.

### Description of the Preferred Embodiments

The center-weighted metering method and the multi-division metering method perform the averaging metering of the surface of a subject. Therefore, for example, if light dust or the like enters the focus area of a subject when determining an exposure time by the center-weighted metering method or the multi-division metering method in fluorescent observation, exposure falls short of its appropriate value (under exposure).

Therefore, for such an observation image by fluorescent observation the spot metering method is often used. According to the spot metering method, a spot metering point can be specified in the focus area metering of a subject, metering can be applied to the point and an exposure time can be determined. Thus, since an appropriate exposure time can be determined even against a dark background, light dust and the like without the influences of metering, good photography can be realized.

However, if an observation target moves out of the measurement-sensitive area of the spot metering even when such a spot metering method is used, a picture whose exposure exceeds its appropriate value (over exposure) is sometimes obtained. In order to solve such a problem, it can be considered to fix an exposure time. However, if an exposure time is fixed, an appropriate exposure time cannot be obtained when color of an observation target fades and so on. Therefore, it is necessary for an observer to always pay attention to an observation target, combine the above-described exposure control methods and adjust exposure in such a way as to obtain appropriate exposure.

Therefore, in the preferred embodiment of the present invention, a microscope imaging apparatus capable of setting an appropriate exposure time for a focus area even when the brightness value of an observation target changes is provided.

A microscope imaging system according to the preferred embodiment of the present invention includes an imaging unit, an imaging drive unit, an image output unit, an acquisition unit, a brightness histogram generation unit, a brightness value calculation unit and an exposure control unit.

The imaging unit images a specimen image outputted from a microscope. The imaging unit corresponds to an imaging device 11 in the preferred embodiment.

The imaging drive unit drives the imaging unit. The imaging drive unit corresponds to an imaging device drive unit 12 in the preferred embodiment.

The image output unit outputs the picked-up image. The image output unit corresponds to an output I/F 23 for outputting the image to a monitor 19 in the preferred embodiment.

The acquisition unit obtains a second image area being a focus area composed of one or more pixels arbitrarily specified in a first image area indicated by the entire area or a predetermined area of the outputted image. The acquisition unit corresponds to an input I/F 24 to which an operational instruction is inputted from an operation unit 22 in the

### preferred embodiment.

The brightness histogram generation unit generates a first brightness histogram of the first image area and a second brightness histogram of the second image area. The brightness histogram generation unit corresponds to a brightness histogram conversion unit 151 in the preferred embodiment.

The brightness value calculation unit calculates the relative brightness value of the second image area against the first image area by detecting the feature point of the second brightness histogram and calculating a position corresponding to the feature point of the second brightness histogram in the first brightness histogram. Specifically, the brightness value calculation unit calculates the intersection point between the threshold value of the number of pixels indicated by frequency in the first brightness histogram and the first brightness histogram, and calculates the relative brightness value of the second image area against the first image area. The brightness value calculation unit corresponds to an exposure calculation unit 161 in the preferred embodiment.

The exposure control unit controls the imaging drive unit until the exposure reaches the calculated brightness value. The exposure control unit corresponds to an exposure control unit 162 in the preferred embodiment.

Thus, even when the brightness value of an observation target changes, an appropriate exposure time can be set against the focus area.

When there are two or more of the calculated intersection points, the brightness value calculation unit can obtain two points of the intersection points, calculates a first distance toword the axis in the first brightness histogram between the obtained two points, calculates a second distance between one of the intersection points and the feature point, and calculates a ratio between the second distance and the first distance.

Thus, appropriate exposure can be obtained on the basis of the calculated ratio from the viewpoint that even when the brightness value of an observation target changes, relatively the brightness value of the focus area does not change against the brightness of the entire image.

When there are three or more of the calculated intersection points, the brightness value calculation unit can obtain two points on the utmost outside of the intersection points can also obtain. Thus, two intersection points can be obtained regardless of the shape of the brightness histogram.

The microscope imaging system can also further include a pixel extraction unit. The pixel extraction unit extracts a pixel having the same RGB ratio as at least one pixel that is picked up under a light-view observation, dark-view observation or fluorescent observation condition and obtained as a pixel in the second image area by the acquisition unit from the first image area. The pixel extraction unit corresponds to an RGB calculation unit 152 in the preferred embodiment. In this case, the brightness histogram generation unit can generate the second brightness histogram on the basis of the extracted pixel.

Thus, since a brightness value ratio of the focus area to the entire image taking color components into consideration can be obtained, a more appropriate exposure time can be set against the focus area.

Furthermore, in the microscope imaging system, the threshold value can be set below the upper limit of the number of pixels indicated by frequency in the first brightness histogram. Thus, a threshold value can be arbitrarily set against the brightness histogram of the first image area.

Furthermore, the feature point is a peak or a center point in the second brightness histogram. Thus, a feature point can be arbitrarily set according to the characteristic of the brightness histogram.

The microscope imaging system can also further include a storage unit for storing the exposure time of the imaging drive unit. The storage unit corresponds to a recording unit 20 in the preferred embodiment. In this case, when the number of the calculated intersection points is one or less, the brightness value calculation unit can read an exposure time stored in the storage unit and the imaging drive unit can perform exposure on the basis of the read exposure time.

The microscope imaging system can also further include an objective exchanging detection unit and a message output unit. The objective exchanging detection unit detects the exchange of the objective of the microscope. More specifically, the objective exchanging detection unit can detect whether the objective of the microscope isexchanged, on the basis of the change of the amount of light inputted to the imaging unit. The objective exchanging detection unit corresponds to an objective exchanging detection unit 153 in the preferred embodiment. The message output unit outputs message for urging an observer to pay attention to whether its exposure is appropriate when it is detected that the objective isexchanged. The message output unit corresponds to a display control unit 17 in the preferred embodiment.

Thus, when it is determined that an objective isexchanged, there is a possibility that the shape of a brightness histogram changes. Therefore, for example, message for urging an observer to pay attention to its exposure, such as "Is the exposure appropriate?" can be displayed.

### <First Embodiment>

In this preferred embodiment, a microscope imaging apparatus for calculating the relative brightness value of a focus area against that of the entire observation image and setting an exposure time on the basis of the calculated brightness value will be explained.

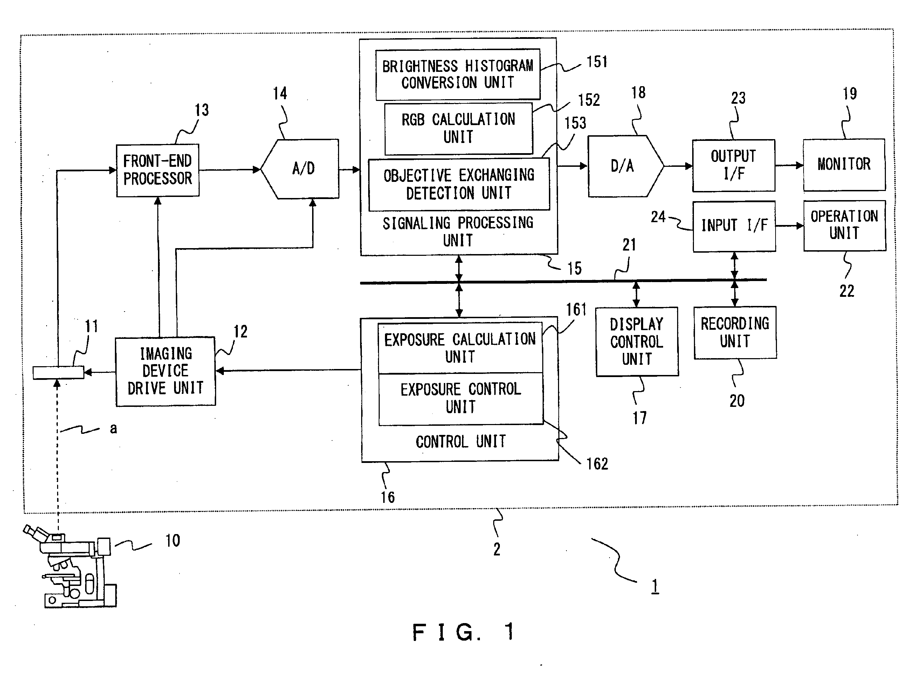

Fig. 1 illustrates the configuration of a microscope system in this preferred embodiment. A microscope system 1 includes a microscope main body 10 and a microscope imaging apparatus 2. The microscope main body 10 enables an observer to observe the observation image of a specimen, which is not illustrated in Fig. 1, by the observer's eyes. The observation image is outputted to the microscope imaging apparatus 2 along an observation optical path a.

The microscope imaging apparatus 2 includes an imaging device 11, an imaging device drive unit 12, a front-end processor 13, an A/D conversion unit 14, a signal processing unit 15, a control unit 16, a D/A conversion unit, a monitor 19, a recording unit 20, a bus 21, an operation unit 22, an output I/F 23 and an input I/F 24.

The imaging device 11, such as a CCD or the like is disposed in a position on which an observation image from the microscope main body 10 is projected, as an imaging unit. In this preferred embodiment, a CCD using color filters arranged in a Bayer array will be explained as an example.

The imaging device 11 drives for an exposure time based on a drive signal from the imaging device drive unit 12. The imaging device 11 converts an observation image to an electric signal and outputs the electric signal to the front-end processor 13. When the imaging device drive unit 12 gives a control pulse to it, the front-end processor 13 converts the output signal from the imaging device 11 to an image signal and outputs the image signal to the A/D conversion unit 14.

The A/D conversion unit 14 converts the image signal from the front-end processor 13 from an analog signal to a digital signal, on the basis of a clock signal from the imaging device drive unit 12. The A/D conversion unit 14 outputs the digitized image signal to the signal processing unit 15.

The signal processing unit 15 includes a unit for obtaining brightness value data from the image signal, a unit for obtaining RGB data from the image signal and a unit for performing a signal processing, such as color correction, gradation correction and the like. The signal processing unit 15 further includes a brightness histogram conversion unit 151, an RGB calculation unit 152 and an objective exchanging detection unit 153.

The brightness histogram conversion unit 151 converts the obtained brightness value data to a brightness histogram. The RGB calculation unit 152 calculates the RGB ratio of a pixel specified by the observer (hereinafter called "focus pixel") and extracts a pixel having the same RGN ratio as that of the focus pixel from the entire screen or from part of the image signal. The objective exchanging detection unit 153 detects the exchange of an objective.

The image signal outputted from the signal processing unit 15 is converted to a digital signal to an analog signal by the D/A conversion unit 18 and is displayed on the monitor 19 as a moving image. Image data based on the image signal is recorded in the recording unit 20.

The control unit 16 includes an exposure calculation unit 161 and an exposure control unit 162. The exposure calculation unit 161 calculates the exposure time for the imaging device 11 on the basis of a brightness histogram outputted from the signal processing unit 15, a threshold value, which will be described later, and the length of an intersection point, which will be described later. The exposure control unit 162 controls the exposure time of the imaging device 11 on the basis of the calculation result of the exposure calculation unit 161.

The display control unit 17 adjusts the display state of the monitor 19 and displays predetermined message, via the output interface (I/F) 23.

The operation unit 22 is used to specify an area that the observer desires to observe (hereinafter called "focus area") in an image displayed on the monitor 19. The operation instructing signal of the operation unit is transmitted to the signal processing unit 15 via the input interface (I/F) 24.

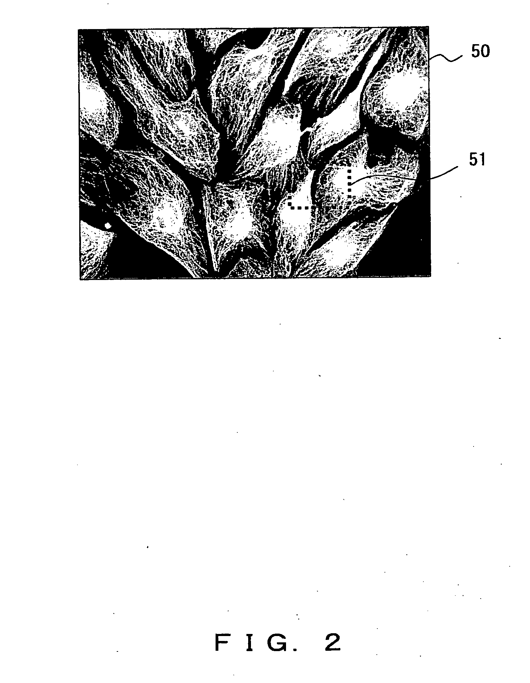

Fig. 2 illustrates one example of an observation image displayed on the monitor 19. The observer can specify an area that the observer desires to observe (focus area) in an observation image 50 displayed on the monitor 19, using the operation unit 22.

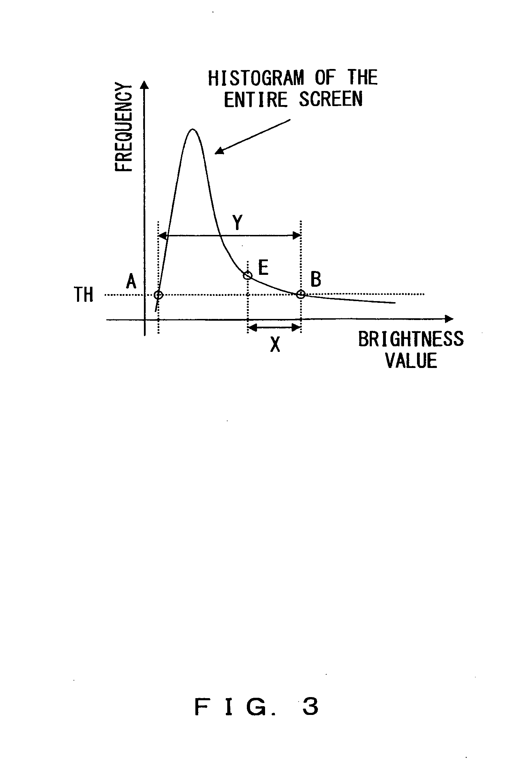

Fig. 3 illustrates one example of the brightness histogram of the entire observation image. Its horizontal and vertical axes indicate a brightness value and the number of pixels (frequency) corresponding to the brightness value, respectively. As one example, Fig. 3 illustrates the brightness histogram of the number of pixels in the entire observation image 50.

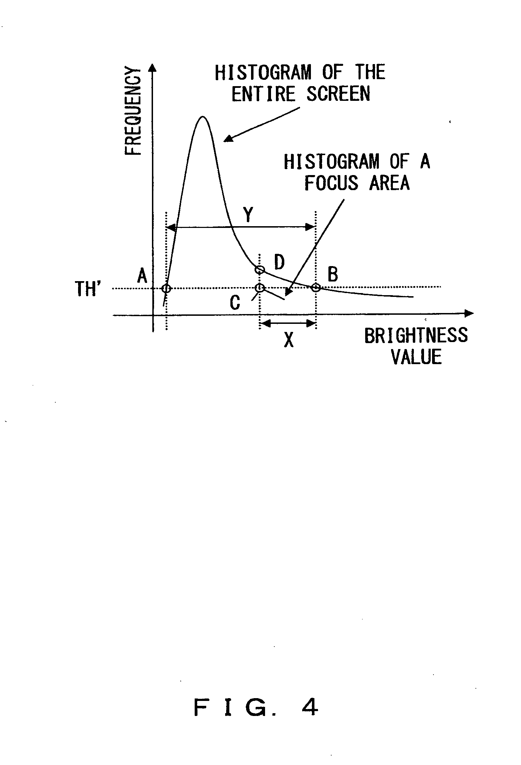

Fig. 4 illustrates one example of the brightness histograms of the entire observation image and its focus area. As one example, Fig. 4 illustrates the brightness histograms of the number of pixels in the entire observation image 50 and the focus area 51.

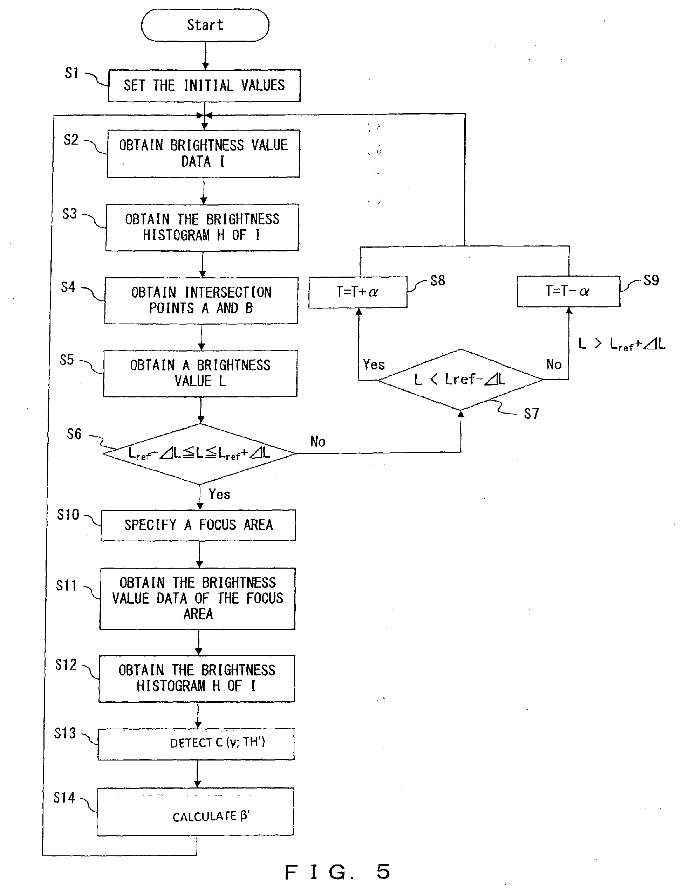

Fig. 5 illustrates the flowchart of the exposure control in the first preferred embodiment. Fig. 5 will be explained below with reference to Figs. 1 through 4. Firstly, the signal processing init 15 initializes each parameter assuming that the initial values of a threshold value TH and a ratio β, which will be described later are th and F, respectively (TH=th and β =F). The control unit 16 initializes its parameter assuming that the initial value of an exposure time T is Tᵢₙᵢ (T= Tᵢₙᵢ (S1).

Then, the imaging of a specimen by a microscope is started. The exposure control unit 162 sets the exposure time T= Tᵢₙᵢ in the imaging device drive unit 12. Then, an image signal exposed for the exposure time T= Tᵢₙᵢ can be obtained. The signal processing unit 15 obtains the time-averaged brightness value data I of the entire screen. Specifically, the signal processing unit 15 determines one obtained by overlapping and averaging several frames of brightness value data as the brightness value data I (S2).

Then, the brightness histogram conversion unit 151 generates the brightness histogram H of the entire screen from the brightness value data I of the entire screen (S3) (see Fig. 3).

Then, as illustrated in Fig. 3, the signal processing unit 15 calculates the intersection points A(A₁, TH) and B(B₁, TH) between the threshold value TH=th and the brightness histogram H of the entire screen (S4).

Then, as illustrated in Fig. 3, the exposure calculation unit 161 calculates the brightness value L of a point E on the brightness histogram H using a length Y (=|A₁-B₁|) between the intersection points A and B and the ratio β=F (S5). Since X = Y×β, the brightness value L of the point E becomes B₁-X (L= B₁-X).

The exposure calculation unit 161 compares the calculated brightness value L with an exposure reference value L_{ref} (S6) . In the following description it is assumed that α and Δ L indicate an exposure time adjustment numeric value and the error of a brightness value, respectively.

In S6, if L > L_{ref} + ΔL (in the case of "No" in S6 and "Yes" in S7), the exposure calculation unit 161 sets an exposure time T=T-α in the imaging device drive unit 12 (S9) and obtains the brightness value data I of the entire screen again (S2).

S2 through S9 are repeated until L_{ref} - ΔL≦L≦L_{ref} + ΔL is realized, namely, an image displayed on the monitor 19 enters a stationary state. After L_{ref} - ΔL≦L≦L_{ref} + ΔL is realized, the process advances to S10. The exposure time in the case where this stationary state is realized is specified as T=Tₛₜₐₜ.

Then, as explained in Fig. 2, the observer specifies the focus area 51 in the entire image 50 displayed on the monitor 19, using the operation unit 22 (S10). Then, the signal processing unit 15 obtains the time-averaged brightness value data i of the specified focus area (S11). Specifically, one obtained by overlapping and averaging several frames of brightness value data of the focus area 51 is specified as the brightness value data i.

Then, the brightness histogram conversion unit 151 generates the brightness histogram h of the focus area 51, on the basis of the brightness value data i of the focus area 51 (S12). Then, the signal processing unit 15 obtains the peak C (γ, TH') of the brightness histogram h (S13). Then, the signal processing unit 15 re-sets the threshold value TH as a threshold value TH=TH'.

Then, the signal processing unit 15 calculates β'=X/Y using the brightness histograms H, h and the threshold value TH=TH' . However, X = |B₁ - γ|. Then, the signal processing unit 15 re-sets β as β=β' and the process returns to S2.

Then, the signal processing unit 15 performs the processes in S2 and after and calculates the brightness value L of a point D using the reset threshold value TH=TH' and the ratio β=β'(S5). In this case, the intersection points A(A₁', TH') and B(B₁', TH') are calculated on the basis of the threshold value TH=TH' and the brightness histogram H of the entire screen. Then, as illustrated in Fig. 4, the exposure calculation unit 161 calculates the brightness value L (=B₁'-Y' × β') of the point D using the length Y' (=A₁'-B₁'|) between the intersection points A and B and the ratio β=β'(S5).

Then, the exposure calculation unit 161 calculates an exposure time Tₛₜₐₜ in the case where the brightness L of the point D is between L_{ref}- ΔL and L_{ref}+ ΔL (L_{ref}- ΔL≦L≦L_{ref}+ ΔL) (S6) . Specifically, S2 through S9 are repeated until L_{ref}- ΔL≦L≦L_{ref}+ Δ L, namely, an image displayed on the monitor 19 enters a stationary state. It is assumed an exposure time T in the case of L_{ref}- ΔL≦L≦L_{ref}+ ΔL is established (an image displayed on the monitor 19 enters a stationary state) is Tₛₜₐₜ (T= Tₛₜₐₜ). Thus, an appropriate exposure time Tₛₜₐₜ of the point D can be obtained. As a result, an image whose focus area is appropriately exposured can be displayed on the monitor 19.

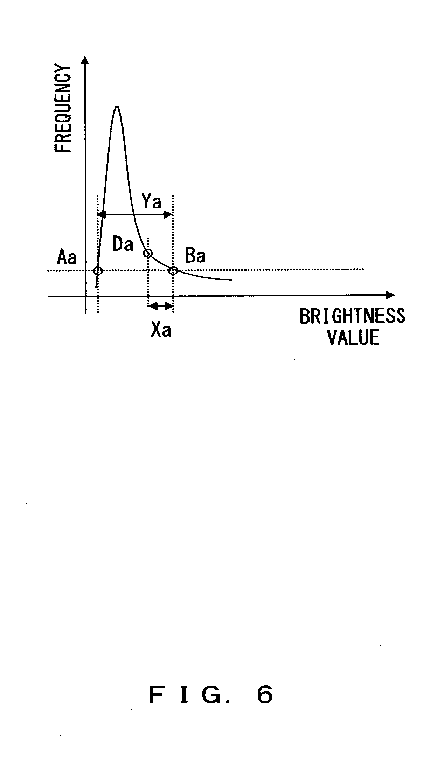

Fig. 6 illustrates a brightness histogram in the case where the lightness of the entire screen has wholly changed. When the lightness of the entire screen has wholly changed, the brightness histogram of the entire screen also changes. However, the change is relative. In Fig. 6, intersection points Aa and Ba, a point Da and lengths Xa and Yb correspond to the intersection points A and B, the point D and the lengths X and Y, respectively. The positions of the intersection points Aa and Ba, the point Da and the lengths Xa and Yb can be obtained by relatively changing the positions of the intersection points A and B, the point D and the lengths X and Y.

Therefore, even when the brightness histogram of the entire screen changes, the intersection points Aa and Ba can be reset according to the brightness histogram after the change as long as the focus area is not specified again or β is not reset again.

Thus, a specimen can be observed with appropriate exposure without an observer always setting the point that the observer can observe, of the specimen and the point Da troublesomely. For example, even when light dust or the like enters a metering spot in fluorescent observation, the threshold value, the intersections A and B are not affected by the light dust. Therefore, an appropriate exposure time can be always obtained. Even when color of an observation target has faded too, since the color fading is applied to the entire image, color of the focus area also fades at the same rate. Therefore, if the present invention using a correlation is used, an appropriate exposure time can be always obtained.

When it is determined that an objective is exchanged in the objective exchanging detection unit 152, there is a possibility that the shape of the brightness histogram changes. Therefore, for example, message for urging observer's attention, such as "Is the exposure appropriate?" or the like can be also displayed on a display device, such as the monitor 19 or the like by the display control unit 17.

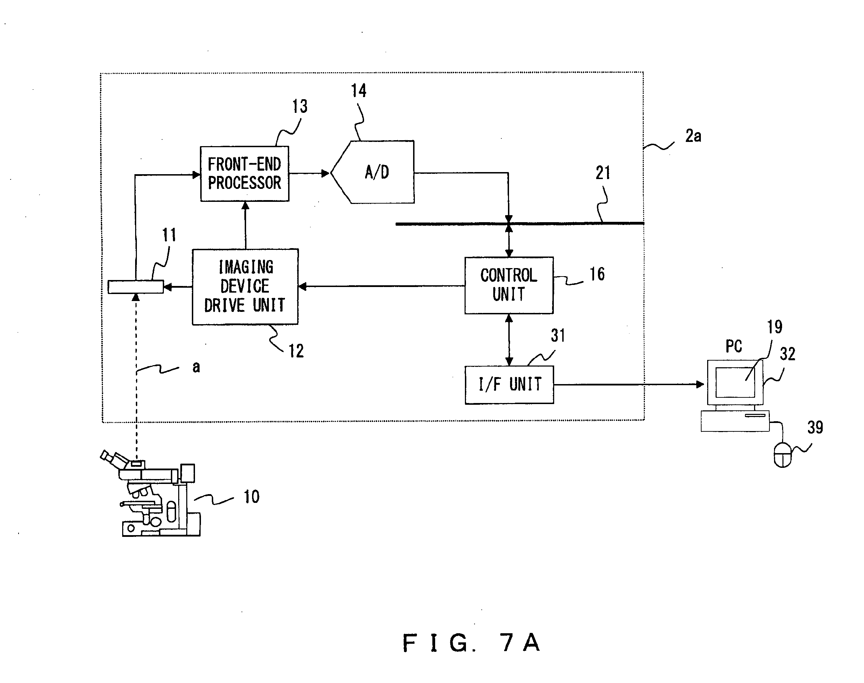

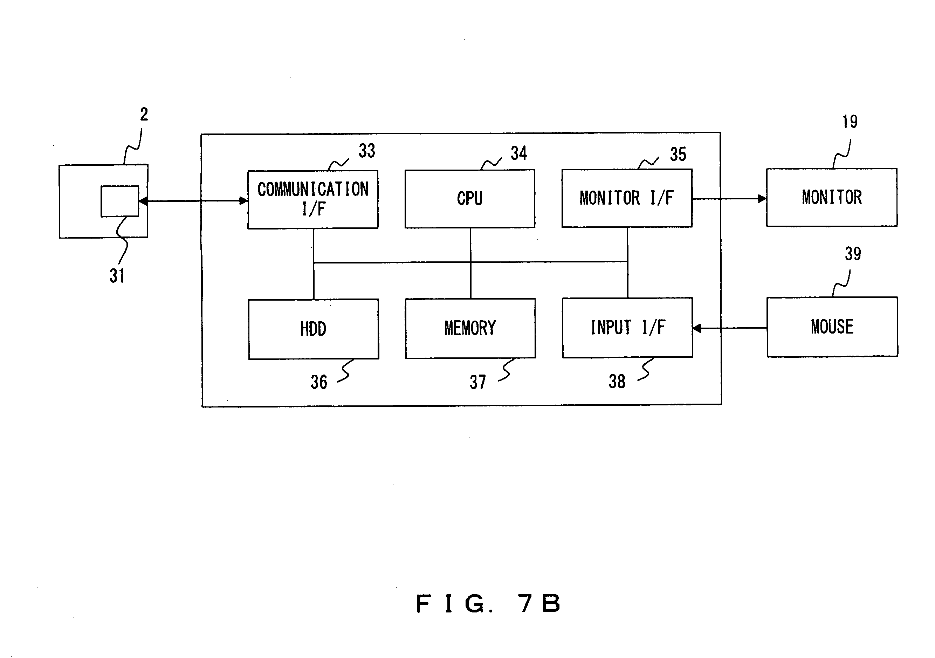

Fig. 7A illustrates the configuration of a microscope system in the first preferred embodiment (variation). Fig. 7B illustrates the configurations of a personal computer 32 (hereinafter called "PC") in the first preferred embodiment (variations). In Figs. 7A and 7B, the same reference numerals are attached to the same components as illustrated in Fig. 1.

In this variation, a microscope imaging system 30 includes a microscope imaging apparatus 2a and a PC 32. The microscope imaging apparatus 2a includes an imaging device 11, an imaging device drive unit 12, a front-end processor 13, an A/D conversion unit 14, a control unit 16, a bus 21 and a communication interface unit (hereinafter called "I/F") 31. The PC 32 is connected to the control unit 16 via the communication I/F 31. The PC 32 has the functions of the above-described signal processing unit 15, monitor 19, recording unit 20 and operation unit 22.

The monitor 19 and a mouse 39 as the operation unit 22 are connected to the PC 32. The PC 32 includes a communication I/F 33, a CPU 34, a monitor I/F 35, a hard disk drive (HDD) 36, memory 37 and an input I/F 38. The communication I/F 33 is used to communicate with the microscope imaging apparatus 2. A program executed in the signal processing unit 15 is installed in the HDD 36. The memory 37 is RAM, ROM or the like. The CPU 34 functions as the signal processing unit 15. The monitor I/F 35 is used to output an image to the monitor 19. The input I/F 39 is used to input an operational signal from the mouse 39.

With such a configuration, even a PC side can also calculate the relative brightness value of the focus area against the entire observation image on the basis of the brightness histogram of the entire observation image and the brightness histogram of the focus area and set an exposure time on the basis of the calculated brightness value.

### <Second Embodiment>

In this preferred embodiment, a microscope imaging apparatus for setting an appropriate exposure time on the basis of the brightness value ratio of the focus area to the entire image taking color components into consideration will be explained.

The configuration of a microscope system in this preferred embodiment can be applied to either Fig.1 or Fig. 7. In this preferred embodiment, the same reference numerals are attached to the same components as in the first preferred embodiment and their explanations are omitted.

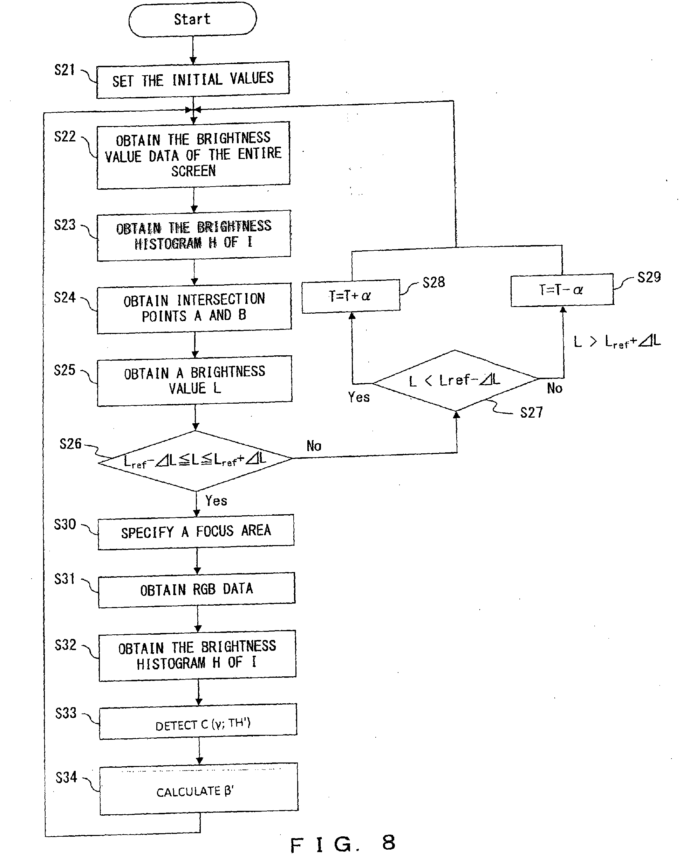

Fig. 8 illustrates the flowchart of the exposure control in this preferred embodiment. In this preferred embodiment, the flow will be explained on the basis of the configuration illustrated in Fig. 1 for the conveniences' purpose of explanation.

Firstly, the signal processing unit 15 sets the initial values of a threshold value TH and a ratio β to th (TH=th)and F (β=F), respectively. The control unit 16 sets the initial value of an exposure time T to Tᵢₙᵢ (T=Tᵢₙᵢ)(S21).

Then, the imaging of a specimen by a microscope starts. The exposure control unit 162 sets the exposure time Tᵢₙᵢ in the imaging device drive unit 12 (T=Tᵢₙᵢ). Then, an image signal exposure for the exposure time Tᵢₙᵢ is obtained. The signal processing unit 15 obtains the brightness value data I of the time-averaged entire screen from the microscope imaging apparatus 2. Specifically, the signal processing unit 15 specifies one obtained by overlapping and averaging several frames of brightness value data as the brightness value data I (S22).

Then, the brightness histogram conversion unit 151 generates a brightness histogram H on the basis of the brightness value data of the screen (S23). The brightness histogram conversion unit 151 generates the brightness histogram H by converting the RGB data of the entire screen into brightness data according to, for example, a brightness value Y=0.299R+0.587G+0.114B.

Then, as illustrated in Fig. 3, the signal processing unit 15 calculates intersection points A(A_{1,} TH) and B(B₁, TH) between the initial value of the threshold value th and the brightness histogram H of the entire screen (S24).

Then, the exposure calculation unit 161 calculates the brightness value L of a point E on the brightness histogram H (S25). Since X is expressed by Y×β (X-Y×β), the brightness value L of the point E becomes B1-X (L= B1-X).

The exposure calculation unit 161 compares the calculated brightness value L with an exposure reference value L_{ref} (S26). In the following explanation, it is assumed that α and ΔL indicate an exposure time adjustment numeric value and its error difference, respectively.

If in S26, L < L_{ref} - ΔL ("No" in S26 and "Yes" in S27), the exposure calculation unit 161 sets the exposure time to T+ α in the imaging device drive unit 12 (S28) and obtains the brightness value data I of the entire screen again (S22).

If in S26, L > L_{ref} + ΔL ("No" in S26 and "No" in S27), the exposure calculation unit 161 sets the exposure time to T-α in the imaging device drive unit 12 (S29) and obtains the brightness value data I of the entire screen again (S22).

Then, S22 through S29 are repeated until L_{ref}- ΔL≦L≦L_{ref}+ Δ L is satisfied, namely, an image displayed on the monitor 19 enters a stationary state. After L_{ref}- ΔL≦L≦L_{ref}+ ΔL is satisfied, the process advances to S30. The exposure time in the case where the image displayed on the monitor 19 enters a stationary state is specified as Tₛₜₐₜ.

Then, as illustrated in Fig. 2, the observer specifies the focus area 51 in the entire image 50 displayed on the monitor 19 using the operation unit 22 (S30). Then, the RGB calculation unit 152 calculates the time-averaged RGB ratio γ of the specified focus pixel (S31).

Then, the signal processing unit 15 extracts a pixel of the same RGB ratio as the obtained RGB ratio γ. Then, according to, for example, a brightness value Y=0.299R+0.587G+0.114B, the brightness histogram conversion unit 151 converts the RGB data of the extracted pixel to brightness data and generates brightness histogram h (S32). Then, the signal processing unit 15 obtains the peak C (γ, TH') of the brightness histogram h (S33). Then, the signal processing unit 15 resets the threshold value to TH' (T=TH').

Then, the signal processing unit 15 calculates β'=X/Y using the brightness histograms H and h and the threshold TH'(S34). However, X = |B1 - γ|. Then, the signal processing unit 15 sets β to β' and the process returns to S22.

Then, the signal processing unit 15 performs the processes in S2 and after and calculates the brightness value L of the point D using the reset threshold TH' and the ratio β '(S25). In this case, the intersections A(A₁',TH') and B(B₁', TH') between the threshold TH' and the brightness histogram H of the entire screen are calculated. Then, as illustrated in Fig. 4, the exposure calculation unit 161 calculates the brightness value L(=|B₁'|-Y'×β') using the length Y' (=|A₁'-B₁'|) between the intersection points A and B and the ratio β' (S25).

Then, the exposure calculation unit 161 calculates an exposure time Tₛₜₐₜ in the case where the brightness value L of the point D satisfies L_{ref}- ΔL≦L≦L_{ref}+ ΔL (S26). Specifically, S22 through S29 are repeated until L_{ref}- ΔL≦L≦Lᵣₑₚ+ ΔL is satisfied, namely, an image displayed on the monitor 19 enters a stationary state. The exposure time in the case where L_{ref}-ΔL≦L≦L_{ref}+ ΔL is satisfied (the image displayed on the monitor 19 enters a stationary state) is specified as Tₛₜₐₜ. Thus, the appropriate exposure time Tₛₜₐₜ of the point D can be obtained. As a result, an image whose focus area is appropriately exposure can be displayed on the monitor 19.

According to this preferred embodiment, since the brightness value ratio of a focus area against the entire image taking its color components into consideration can be obtained, the more appropriate exposure time of the focus area can be set.

In the cases of the configurations illustrated in Fig. 7A and 7B, the CPU 34 can function as the signal processing unit 15 and perform the process illustrated in Fig. 8 by reading and executing the program of this preferred embodiment from the HDD 36.

As to the second preferred embodiment, as explained in the first preferred embodiment (Fig. 6), even when the brightness value of the entire screen changes, the intersections Aa and Ba can be reset according to the brightness histogram after the change as long as a focus pixel is not specified again. Thus, the point of a specimen that an observer always desires to observe and a point Da can be observed with appropriate exposure without troublesome settings. Furthermore, this preferred embodiment can be also applied to not only a light-view observation method but also a colored image observation method including a fluorescent observation method and a dark-view observation method.

For example, even when a stage is unintentionally moved or when an observation target moves, it is controlled in such a way that a pixel focused by an observer, that is, a color that the observer desires to observe can be always observed with appropriate exposure. Therefore, even in the case of light-view observation, the same effect as described in the first preferred embodiment can be expected.

The present invention is not limited to the above-described preferred embodiments and in an execution stage, it can be variously modified as long as its subject matter is not departed. For example, the brightness histogram of an image area a little inside the edge of the image (a part) can be also used instead of the brightness histogram of the entire screen.

For example, although in the first or second preferred embodiment, the relative brightness value of a focus area or focus pixel against the entire observation image is calculated on the basis of the brightness histogram of the entire image and the brightness histogram of a focus area or a focus pixel, this is not restrictive of the present invention. For example, the relative brightness value of a focus area or focus pixel against the entire observation image can be also calculated can be also calculated on the basis of the brightness histogram of a predetermined area in the entire image and the brightness histogram of a focus area or a focus pixel.

Furthermore, although in the first or second preferred embodiment, a peak is extracted as the feature point of the brightness histogram h, this is not restrictive of the invention. For example, the center of the brightness histogram can be also extracted as the feature point of the brightness histogram h.

Furthermore, as its variation, in S4 and S24, when there is one or less intersection point between the histogram of the entire screen and a threshold value, the control unit 16 can also fix an exposure time T immediately before an observer specifies a focus area to Tₛₜₐₜ.

Furthermore, in S4 and S24, when there are three or more intersection points between the histogram of the entire screen and a threshold value, the signal processing unit 15 can also set two utmost-outside points as A and B.

Furthermore, a plurality of pixels can be selected as the focus pixel in S29 regardless of whether they are in the same area. For example, when in S30 a plurality of pixels is selected, in S32 a brightness histogram can be also calculated for each focus area, the feature point C(γ, TH') of one obtained overlapping the plurality of pixels can be also extracted and a point D on the histogram H of the entire screen can be also calculated on the basis of this C.

According to the first and second preferred embodiments, an exposure time that an observer desires can be provided in the same specimen by knowing the feature of an area on which the observer focuses. Furthermore, once an exposure time is set, a function obtained by adding AE (auto-exposure), AE lock, spot metering, screen-averaging metering and the like can be provided even when an observation object moves, when a specimen has moved and so on. Therefore, an appropriate exposure time can be obtained without troublesome settings. As a result, the work efficiency of an observer can be improved.

Furthermore, the present invention can be also applied to either a static image display form or a live image display form.

According to the present invention, even when the brightness value of an observation target changes, the appropriate exposure time of a focus area can be set. Simultaneously, the work load of an observer can be reduced and work efficiency can be improved.

## Claims

1. A microscope imaging system capable of being attached to a microscope and performing automatic exposure control, the microscope imaging system comprising:
an imaging unit (11) for imaging a specimen image outputted from a microscope;
an imaging drive unit (12) for driving the imaging unit;
an image output unit (23) for outputting the picked-up image;
an operation unit (22) with which a user arbitrarily specifies a focus area composed of one or more pixels in a first image area that is an entirety of the outputted image;
an acquisition unit (24) for obtaining the focus area specified by the operation unit as a second image area;
a brightness histogram generation unit (151) being adapted to generate a first brightness histogram that indicates a number of pixels of the first image area corresponding to a brightness value in ascending order and a second brightness histogram that indicates a number of pixels of the second image area corresponding to a brightness value in ascending order;
a signal processing unit (15) being adapted to set a threshold value of the number of pixels and a ratio (β) in the first brightness histogram;
a brightness value calculation unit (161) being adapted to detect a peak value or center point of the second brightness histogram as a feature point, and to calculate two or more intersection points between the first brightness histogram and the threshold value, to obtain two points of the intersections, to calculate a first distance toward an axis in the first brightness histogram between the obtained two points, to calculate a second distance between one of the intersection points and the feature point, to calculate the ratio (β) between the second distance and the first distance, and to calculate, using the ratio (β), a relative brightness value that is a brightness value of the second image area relative to the first image area; and
an exposure control unit (162) being adapted to control the imaging drive unit until the brightness value reaches the calculated relative brightness value, wherein:
the brightness value calculation unit (161) obtains, as an appropriate exposure time, a time at which the brightness value reaches the relative brightness value; and
the imaging drive unit (12) exposes for the obtained appropriate exposure time, via the exposure control unit (162) performing control.

2. The microscope imaging system according to claim 1,
wherein when there are the three or more calculated intersection points, the brightness value calculation unit (161) obtains two utmost-outside points of the intersection points.

3. The microscope imaging system according to claim 1,
further comprising
a pixel extraction unit (152) for extracting a pixel having the same RGB ratio as at least one pixel that is picked up under a light-view observation, dark-view observation or fluorescent observation condition obtained by the acquisition unit as a pixel in the second image area, from the first image area, wherein
the brightness histogram generation unit (151) generates the second brightness histogram on the basis of the extracted pixel.

4. The microscope imaging system according to claim 1,
wherein the threshold value can be set to below an upper limit of the number of pixels indicated by frequency in the first brightness histogram.

5. The microscope imaging system according to claim 1,
further comprising
a storage unit (20) for storing an exposure time used by the imaging drive unit, wherein
where there is the one or less calculated intersection point, the brightness value calculation unit (161) reads an exposure time stored in the storage unit (20) and
the imaging drive unit exposes for the read exposure time.

6. The microscope imaging system according to claim 1,
further comprising:
an objective exchanging detection unit (153) for detecting exchange of an objective of the microscope; and
a message output unit (17) for outputting message for urging an observer to check whether exposure is appropriate to the observer when the exchange of an objective is detected.

7. The microscope imaging system according to claim 6,
wherein the objective exchanging detection unit (153) detects whether the exchange of an objective of the microscope is performed on the basis of a change in amount of light inputted to the imaging unit (11).

8. An exposure adjustment method of a microscope imaging system for adjusting exposure when picking up an image to be observed by a microscope, comprising:
driving an imaging unit and imaging a specimen image outputted from a microscope (11);
outputting the picked-up image (23);
specifying a focus area composed of one or more pixels in a first image area that is an entirety of the outputted image;
obtaining a second image area being a focus area composed of one or more pixels arbitrarily specified in a first image area indicated by an entire area or a predetermined area of the outputted image (24);
generating a first brightness histogram that indicates a number of pixels of the first image area corresponding to a brightness value in ascending order and a second brightness histogram that indicates a number of pixels of the second image area (151) corresponding to a brightness value in ascending order;
setting a threshold value of the number of pixels and a ratio (β) in the first brightness histogram;
detecting a peak value or center point of the second brightness histogram as a feature point, and calculating two or more intersection points between the threshold value, and calculates a relative brightness value of the second image area against the first image area, obtaining two points of the intersections, calculating a first distance toward an axis in the first brightness histogram between the obtained two points, calculating a second distance between one of the intersection points and the feature point, calculating the ratio (β) between the second distance and the first distance and calculating by using the ratio (β), a relative brightness value that is a brightness value of the second image area relative to the first image area;
controlling the imaging unit until the brightness value reaches the calculated relative brightness value;
obtaining, as an appropriate exposure time, a time at which the brightness value reaches the relative brightness value; and
performing an exposure for the obtained appropriate exposure time.

9. A storage medium on which is recorded an exposure adjustment program for enabling a computer to execute the exposure adjustment method according to claim 8.

## Patentansprüche

1. Mikroskop-Abbildungssystem, das an einem Mikroskop anbringbar ist und eine automatische Belichtungssteuerung ausführt, wobei das Mikroskop-Abbildungssystem aufweist:
eine Abbildungseinheit (11) zum Abbilden eines Spezimenbildes, das von einem Mikroskop ausgegeben wird;
eine Abbildungsantriebseinheit (12) zum Antreiben der Abbildungseinheit; und
eine Bildausgabeeinheit (23) zum Ausgeben des aufgenommenen Bildes;
eine Betätigungseinheit (22), mit der ein Nutzer einen frei wählbaren Fokusbereich spezifiziert, der von einem oder mehreren Pixel in einem ersten Abbildungsbereich gebildet wird, wobei die erste Abbildungsbereich der Gesamtheit des ausgegebenen Bildes entspricht;
eine Erzeugungseinheit (24) zum Erhalten des Fokusbereichs, der durch die Betätigungseinheit als zweiter Abbildungsbereich spezifiziert wird;
eine Helligkeitshistogrammerzeugungseinheit (151), die zum Erzeugen eines ersten Helligkeitshistogramms, das eine Anzahl von Pixeln des ersten Abbildungsbereichs entsprechend einem Helligkeitswerts in aufsteigender Ordnung angibt, und eines zweiten Helligkeitshistogramms ausgebildet ist, dass eine Anzahl von Pixeln des ersten Abbildungsbereichs entsprechend einem Helligkeitswert in aufsteigender Ordnung angibt;
eine Signalverarbeitungseinheit (15), die zum Einstellen eines Schwellwerts der Anzahl der Pixel und eines Verhältnisses (β) in dem ersten Helligkeitshistogramm ausgebildet ist;
eine Helligkeitswertberechnungseinheit (161), die dazu ausgebildet ist, einen Maximalwert oder einen Mittelpunkt des zweiten Helligkeitshistogramm als Merkmalspunkt zu erfassen, und zwei oder mehr Schnittpunkte zwischen dem ersten Helligkeitshistogramm und dem Schwellwert zu berechnen, zwei Schnittpunkte zu erhalten, eine erste Distanz in Richtung einer Achse in dem ersten Helligkeitshistogramm zwischen den erhaltenen beiden Punkten zu berechnen, eine zweite Distanz zwischen einem Schnittpunkt und dem Merkmalspunkt zu berechnen, das Verhältnis (β) zwischen der zweiten Distanz und der ersten Distanz zu berechnen, und unter Verwendung des Verhältnisses (β) einen relativen Helligkeitswert zu berechnen, der der Helligkeitswert des zweiten Abbildungsbereichs relativ zu dem ersten Abbildungsbereich ist; und
eine Belichtungssteuerungseinheit (162), die dazu ausgebildet ist, die Abbildungsantriebseinheit zu steuern, bis der Helligkeitswert den berechneten relativen Helligkeitswert erreicht,
wobei:
die Helligkeitsberechnungseinheit (161) als eine geeignete Belichtungszeit eine Zeit ermittelt, an der der Helligkeitswert den relativen Helligkeitswert erreicht; und wobei die Abbildungsantriebseinheit (12) für die ermittelte geeignete Belichtungszeit mittels der Belichtungssteuerungseinheit (162) belichtet, die die Steuerung ausführt.

2. Mikroskop-Abbildungssystem nach Anspruch 1,
wobei, wenn drei oder mehr berechnete Schnittpunkte vorhanden sind, die Helligkeitswertberechnungseinheit (161) die beiden äußersten Punkte der Schnittpunkte ermittelt.

3. Mikroskop-Abbildungssystem nach Anspruch 1,
ferner aufweisend eine Pixelextrahierungseinheit (152) zum Extrahieren eines Pixels mit demselben RGB-Verhältnis wie das des wenigstens einen Pixels, das unter einer Lichtansichts-Untersuchung, einer Dunkelansicht-Untersuchung oder einem Fluoreszenzuntersuchungszustand aufgenommen wurde, wobei das wenigstens eine Pixel von der Erzeugungseinheit als ein Pixel in dem zweiten Abbildungsbereich von dem ersten Abbildungsbereich erhalten wurde, wobei
die Helligkeitshistogrammerzeugungseinheit (151) das zweite Helligkeitshistogramm auf Basis des extrahierten Pixels erzeugt.

4. Mikroskop-Abbildungssystem nach Anspruch 1,
wobei der Schwellwert unterhalb einer oberen Grenze der Anzahl der Pixel eingestellt wird, die durch die Frequenz des ersten Helligkeitshistogramm angezeigt wird.

5. Mikroskop-Abbildungseinheit nach Anspruch 1,
ferner aufweisend
eine Speichereinheit (20) zum Speichern einer Belichtungszeit, die durch die Abbildungsantriebseinheit verwendet wird, wobei bei einem oder weniger berechneten Schnittpunkten, die Helligkeitswertberechnungseinheit (161) die in der Speichereinheit (20) gespeicherte Belichtungszeit ausliest und die Abbildungsantriebseinheit für die ausgelesene Belichtungszeit belichtet.

6. Mikroskop-Abbildungssystem nach Anspruch 1,
ferner aufweisend:
eine Objektivauswechselerfassungseinheit (153) zum Erfassen des Wechsels eines Objektivs des Mikroskops; und
eine Nachrichtenausgabeeinheit (17) zum Ausgeben einer Nachricht, um einen Nutzer zur Prüfung zu veranlassen, ob die Belichtung für den Nutzer geeignet ist, wenn der Wechsel des Objektivs erfasst wird.

7. Mikroskop-Abbildungseinheit nach Anspruch 6,
wobei die Objektivwechselerfassungseinheit (153) auf Basis einer Veränderung in dem Betrag des in die Abbildungseinheit (11) eingegebenen Lichts erfasst, ob ein Wechsel des Mikroskop ausgeführt wurde.

8. Belichtungseinstellungsverfahren für ein Mikroskopbelichtungssystem zum Einstellen der Belichtung, wenn ein von einem Mikroskop zu untersuchendes Bild aufgenommen wird, aufweisend:
Antreiben einer Abbildungseinheit und Abbilden eines Spezimenbildes, das von einem Mikroskop (11) ausgegeben wird;
Ausgeben des aufgenommenen Bildes (23);
Spezifizieren eines Fokusbereichs, der von einem oder mehreren Pixel in einem ersten Abbildungsbereich gebildet wird, der die Gesamtheit des ausgegebenen Bildes ist;
Erlangen eines zweiten Abbildungsbereichs, der ein von einem oder mehreren Pixeln gebildeter Fokusbereich ist, wobei der Fokusbereich frei wählbar in einem ersten Abbildungsbereich spezifiziert ist, wobei der erste Abbildungsbereich durch einen gesamten Bereich oder einen vorbestimmten Bereich des ausgegebenen Bildes (24) angezeigt wird;
Erzeugen eines ersten Helligkeitshistogramms, das eine Anzahl der Pixel des ersten Abbildungsbereichs entsprechend eines Helligkeitswerts in aufsteigender Ordnung angibt, und eines zweiten Helligkeitshistogramms, das eine Anzahl von Pixeln des zweiten Abbildungsbereichs um (151) entsprechend einen Helligkeitswert in aufsteigender Ordnung angibt;
Einstellen eines Schwellwerts der Anzahl der Pixel und eines Verhältnisses (β) in dem ersten Helligkeitshistogramm;
Erfassen eines Maximalwertes oder eines Mittelpunkts des zweiten Helligkeitshistogramms als Merkmalspunkt, und Berechnen zweier oder mehrerer Schnittpunkte zwischen dem Schwellwert, und Berechnen eines relativen Helligkeitswerts des zweiten Abbildungsbereichs gegenüber dem ersten Abbildungsbereichs, Ermitteln von zwei Schnittpunkten, Berechnen einer ersten Distanz in Richtung einer Achse in dem ersten Helligkeitshistogramm zwischen den erhaltenen beiden Punkten, Berechnen einer zweiten Distanz zwischen einem der Schnittpunkte und dem Merkmal, Berechnen des Verhältnisses (β) zwischen der zweiten Distanz und der ersten Distanz, und Berechnen unter Verwendung des Verhältnisses (β) eines relativen Helligkeitswerts, der ein Helligkeitswert des zweiten Abbildungsbereichs relativ zu dem ersten Abbildungsbereich ist;
Steuern der Abbildungseinheit bis der Helligkeitswert den berechneten Helligkeitswert erreicht;
Erlangen, als geeignete Belichtungszeit, einer Zeit, an der der Helligkeitswert, den relativen Helligkeitswert erreicht; und
Ausführen einer Belichtung für die ermittelte geeignete Belichtungszeit.,

9. Speichermedium, auf dem ein Belichtungseinstellprogramm gespeichert ist, das einen Computer zum Ausführen des Belichtungseinstellungsverfahrens gemäß Anspruch 8 veranlasst.

## Revendications

1. Système d'imagerie de microscope capable d'être attaché à un microscope et de réaliser une commande d'exposition automatique, le système d'imagerie de microscope comprenant :
une unité (11) d'imagerie destinée à imager une image de spécimen délivrée en sortie depuis un microscope ;
une unité (12) d'entraînement d'imagerie destinée à entraîner l'unité d'imagerie ;
une unité (23) de sortie d'image destinée à délivrer en sortie l'image capturée ;
une unité (22) de commande avec laquelle un utilisateur spécifie de manière arbitraire une zone d'intérêt composée d'un ou de plusieurs pixels dans une première zone d'image qui est une intégralité de l'image délivrée en sortie ;
une unité (24) d'acquisition destinée à obtenir la zone d'intérêt spécifiée par l'unité de commande en tant que deuxième zone d'image ;
une unité (151) de génération d'histogramme de luminosité étant adaptée pour générer un premier histogramme de luminosité qui indique un nombre de pixels de la première zone d'image correspondant à une valeur de luminosité en ordre ascendant et un deuxième histogramme de luminosité qui indique un nombre de pixels de la deuxième zone d'image correspondant à une valeur de luminosité en ordre ascendant ;
une unité (15) de traitement de signal étant adaptée pour établir une valeur de seuil du nombre de pixels et un rapport (β) dans le premier histogramme de luminosité ;
une unité (161) de calcul de valeur de luminosité étant adaptée pour détecter une valeur crête ou un point central du deuxième histogramme de luminosité en tant que point caractéristique, et pour calculer deux points d'intersection ou plus entre le premier histogramme de luminosité et la valeur de seuil, pour obtenir deux points d'intersection, pour calculer une première distance vers un axe dans le premier histogramme de luminosité entre les deux points obtenus, pour calculer une deuxième distance entre l'un des points d'intersection et le point caractéristique, pour calculer le rapport (β) entre la deuxième distance et la première distance, et pour calculer, en utilisant le rapport (β), une valeur de luminosité relative qui est une valeur de luminosité de la deuxième zone d'image par rapport à la première zone d'image ; et
une unité (162) de commande d'exposition étant adaptée pour commander l'unité d'entraînement d'imagerie jusqu'à ce que la valeur de luminosité atteigne la valeur de luminosité relative calculée, dans lequel :
l'unité (161) de calcul de valeur de luminosité obtient, en tant que temps d'exposition approprié, un temps auquel la valeur de luminosité atteint la valeur de luminosité relative ; et
l'unité (12) d'entraînement d'imagerie expose pendant le temps d'exposition approprié obtenu, via l'unité (162) de commande d'exposition exécutant la commande.

2. Système d'imagerie de microscope selon la revendication 1,
dans lequel lorsqu'il existe trois points d'intersection calculés ou plus, l'unité (161) de calcul de valeur de luminosité obtient les deux points les plus à l'extérieur parmi les points d'intersection.

3. Système d'imagerie de microscope selon la revendication 1, comprenant en outre
une unité (152) d'extraction de pixel destinée à extraire un pixel présentant le même rapport RGB qu'au moins un pixel qui est capturé sous une condition d'observation en pleine lumière, d'observation en lumière atténuée ou d'observation en fluorescence obtenu par l'unité d'acquisition en tant que pixel dans la deuxième zone d'image, à partir de la première zone d'image, dans lequel
l'unité (151) de génération d'histogramme de luminosité génère le deuxième histogramme de luminosité sur la base du pixel extrait.

4. Système d'imagerie de microscope selon la revendication 1,
dans lequel la valeur de seuil peut être établie au-dessous d'une limite supérieure du nombre de pixels indiqués par une fréquence dans le premier histogramme de luminosité.

5. Système d'imagerie de microscope selon la revendication 1, comprenant en outre
une unité (20) de mémorisation destinée à mémoriser un temps d'exposition utilisé par l'unité d'entraînement d'imagerie, dans lequel
lorsqu'il existe un point d'intersection calculé ou moins, l'unité (161) de calcul de valeur de luminosité lit un temps d'exposition mémorisés dans l'unité (20) de mémorisation et
l'unité d'entraînement d'imagerie expose pendant le temps d'exposition lu.

6. Système d'imagerie de microscope selon la revendication 1, comprenant en outre :
une unité (153) de détection d'échange d'objectif destinée à détecter un échange d'objectif du microscope ; et
une unité (17) de sortie de message destinée à délivrer en sortie un message destiné à solliciter un observateur pour contrôler si l'exposition est appropriée à l'observateur lorsque l'échange d'un objectif est détecté.

7. Système d'imagerie de microscope selon la revendication 6,
dans lequel l'unité (153) de détection d'échange d'objectif détecte si l'échange d'un objectif du microscope est exécuté sur la base d'un changement de quantité de lumière délivrée en entrée vers l'unité (11) d'imagerie.

8. Procédé de réglage d'exposition d'un système d'imagerie de microscope destiné à régler l'exposition lors de la capture d'une image devant être observée par un microscope, comprenant les étapes consistant à :
entraîner une unité d'imagerie et imager une image de spécimen délivrée en sortie à partir d'un microscope (11) ;
délivrer en sortie l'image capturée (23) ;
spécifier une zone d'intérêt composée d'un ou de plusieurs pixels dans une première zone d'image qui est une intégralité de l'image délivrée en sortie ;
obtenir une deuxième zone d'image étant une zone d'intérêt composée d'un ou de plusieurs pixels spécifiés arbitrairement dans une première zone d'image indiquée par une zone entière ou une zone prédéterminée de l'image délivrée en sortie (24) ;
générer un premier histogramme de luminosité qui indique un nombre de pixels de la première zone d'image correspondant à une valeur de luminosité en ordre ascendant et un deuxième histogramme de luminosité qui indique un nombre de pixels de la deuxième zone d'image (151) correspondant à une valeur de luminosité en ordre ascendant ;
établir une valeur de seuil du nombre de pixels et un rapport (β) dans le premier histogramme de luminosité ;
détecter une valeur crête ou un point central du deuxième histogramme de luminosité en tant que point caractéristique, et calculer deux points d'intersection ou plus entre la valeur de seuil, et calculer une valeur de luminosité relative de la deuxième zone d'image par rapport à la première zone d'image, obtenir deux points d'intersection, calculer une première distance vers un axe dans le premier histogramme de luminosité entre les deux points obtenus, calculer une deuxième distance entre l'un des points d'intersection et le point caractéristique, calculer le rapport (β) entre la deuxième distance et la première distance, et calculer, en utilisant le rapport (β), une valeur de luminosité relative qui est une valeur de luminosité de la deuxième zone d'image par rapport à la première zone d'image ;
commander l'unité d'imagerie jusqu'à ce que la valeur de luminosité atteigne la valeur de luminosité relative calculée ;
obtenir, en tant que temps d'exposition approprié, un temps auquel la valeur de luminosité atteint la valeur de luminosité relative ; et
exécuter une exposition pendant le temps d'exposition approprié obtenu.

9. Support d'enregistrement sur lequel est enregistré un programme de réglage d'exposition destiné à permettre un ordinateur d'exécuter le procédé de réglage d'exposition selon la revendication 8.
